Europäisches Patentamt

European Patent Office

Office européen des brevets

(19)

(11) Veröffentlichungsnummer: **0 162 376**
**B1**

(12) **EUROPÄISCHE PATENTSCHRIFT**

(45) Veröffentlichungstag der Patentschrift: **16.01.91**

(51) Int. Cl.⁵: **H 01 H 9/16,** H 02 J 13/00

(21) Anmeldenummer: **85105681.2**

(22) Anmeldetag: **09.05.85**

(54) Schaltfehlerschutzgerät od. dgl.

(30) Priorität: **21.05.84 DE 3418867**
**26.07.84 DE 3427497**
**17.04.85 DE 3513907**

(43) Veröffentlichungstag der Anmeldung:
**27.11.85 Patentblatt 85/48**

(45) Bekanntmachung des Hinweises auf die
Patenterteilung:
**16.01.91 Patentblatt 91/03**

(84) Benannte Vertragsstaaten:
**AT BE CH DE FR GB IT LI LU NL SE**

(56) Entgegenhaltungen:
**DE-A-2 833 973**

**SIEMENS ZEITSCHRIFT, Band 49, Heft 4, 1975,**
**Seiten 250-253, Erlangen, DE; G. BONIN et al.:**
**"Schaltfehlerschutzgeräte 8TJ2 in**
**Bausteintechnik"**

(73) Patentinhaber: **Ruhrtal-Elektrizitätsgesellschaft**
**Hartig GmbH & Co.**
**Ruhrtalstrasse 19**
**D-4300 Essen 16 (DE)**

(72) Erfinder: **Hartig, Alfred, Dr.-Ing.**
**Kellerstrasse 4**
**D-4300 Essen 16 (DE)**
Erfinder: **Kroepsch, Günter**
**Albermannstrasse 1**
**D-4300 Essen 16 (DE)**

(74) Vertreter: **Gesthuysen, Hans Dieter, Dipl.-Ing.**
**et al**
**Patentanwälte Gesthuysen + von Rohr**
**Huyssenallee 15 Postfach 10 13 33**
**D-4300 Essen 1 (DE)**

Courier Press, Leamington Spa, England.

## EP 0 162 376 B1

**Beschreibung**

Die Erfindung betrifft ein Schaltfehlerschutzgerät gemäß dem Oberbegriff von Anspruch 1.

Schaltfehlerschutzgeräte dienen dazu, unerwünschte und ggf. gefährliche Schaltvorgänge eines mit einer Mehrzahl anderer Schaltgeräte in einer Schaltanlage zusammengefaßten Schaltgeräts zu verhindern bzw. die jeweilige Schaltstellung eines Schaltgeräts in einer Schaltungsnachbildung erkennbar zu machen.

Bei dem bekannten Schaltfehlerschutzgerät, von dem die Erfindung ausgeht (DE-OS 28 33 973), dient als Stellungsmelder zur Meldung der Schaltstellung des Schaltgeräts eine linear verschiebbare Kodierblende, die mit optoelektronischen Elementen zusammenwirkt. Die Kodierblende ist zwischen Lichtsendern und Lichtempfängern angeordnet und mit Lichtdurchtrittsöffnungen versehen. Entsprechend dem Wechsel der Schaltstellung des Schaltgeräts ist die Kodierblende verstellbar, so daß unterschiedlich kodierte Stellungsmeldesignale optoelektronisch erzeugbar und übermittelbar sind. Zur Übermittlung der so erzeugten Signale werden wahlweise Lichtleitkabel eingesetzt, die den Vorteil haben, unempfindlich gegen Störspannungen zu sein und im übrigen mit modernen optoelektronischen Bauelementen kompatibel sind. Als Nachbildungsantrieb für den Stellungsmelder dienen zwei einander entgegengesetzt wirkende Tauchankerspulen. Zur Steuerung der Tauchankerspulen weist eine hier vorgesehene elekische Steuerungsschaltung Kontakte auf, die entsprechend der Schaltstellung des Schaltgeräts betätigbar sind. Der durch die beiden Tauchankerspulen gebildete Nachbildungsantrieb hat eine "AUS-Stellung mit stromdurchflossener erster Tauchankerspule und stromloser zweiter Tauchankerspule, eine "EIN"-Stellung mit stromdurchflossener zweiter Tauchankerspule und stromloser erster Tauchankerspule und eine "LAUF"-Stellung mit stromloser erster und zweiter Tauchankerspule. Durch ein einen weiteren Teil des Nachbildungsantriebs bildendes Federelement wird der Stellungsmelder in die "LAUF"-Stellung vorgespannt, so daß die "LAUF"-Stellung gleichzeitig zur Störungsanzeige dient, nämlich von selbst eingenommen wird, wenn beide Tauchankerspulen stromdurchflossen oder beide Tauchankerspulen stromlos sind. Wie die voranstehenden Ausführungen deutlich machen, sind bei dem aus dem Stand der Technik bekannten Schaltfehlerschutzgerät die Tauchankerspulen jeweils zusammen mit dem entsprechenden, vom Schaltgerät her betätigbaren Kontakt zueinander parallelgeschaltet, und zwar an eine übliche Versorgungsspannung von beispielsweise 60 V, 110 V, 220 V, 250 V od. dgl.

Beim Nachbildungsantrieb des bekannten, zuvor erläuterten Schaltfehlerschutzgeräts sind nur die "AUS"-Stellung und die "EIN"-Stellung elektrisch bzw. elektromagnetisch aktiv vorgegeben, die "LAUF"-Stellung hingegen ist lediglich durch ein mechanisches Federelement vorgegeben. Daher ist die "LAUF"-Stellung von der Zuverlässigkeit und Störanfälligkeit des mechanischen Federelements abhängig; bricht beispielsweise das Federelement, so ist die "LAUF"-Stellung nicht mehr definiert. Das ist sehr problematisch, da dann die sichere Information über die Schaltstellung des Schaltgeräts verlorengeht. Im übrigen ist es bei dem bekannten Schaltfehlerschutzgerät von Nachteil, daß die gesamte Steuerungsschaltung für den Nachbildungsantrieb dieselbe Versorgungsspannung wie die Steuerungsschaltung des Schaltgeräts selbst hat. Dadurch ist dieses Schaltfehlerschutzgerät gegen Störspannungen relativ empfindlich und damit störanfällig.

Im übrigen ist ein Schaltfehlerschutzgerät bekannt (SIEMENS-Prospekt "Schaltfehlerschutz — elektrisch und elektropneumatisch", Bestellnummer E 139/1458), das aus mehreren einzelnen Bausteinen besteht, die jeweils einem Schaltgerät einer Schaltanlage entsprechen. Jeder Baustein ist mit einer Vielzahl von Schaltelementen in Form von Relais versehen, die drei unterschiedlichen Bereichen zugeordnet sind. Dabei ist ein elektrischer Funktionsbereich vorhanden, der mit der normalen Steuerspannung für das Schaltgerät arbeitet, ein zweiter elektrischer Funktionsbereich umfaßt die Schaltelemente, die für eine gegenseitige Verriegelung notwendig sind, und in einem dritten elektrischen Funktionsbereich werden die ankommenden und abgehenden Signale steuerungstechnisch verarbeitet, unter Umständen erfolgt dort auch eine Signalkodierung. Die Stellungsnachbildung ist hier dem zweiten elektrischen Funktionsbereich zugeordnet. Durch den komplizierten Aufbau ist dieses Schaltfehlerschutzgerät störungsempfindlich.

Der Erfindung liegt die Aufgabe zugrunde, ein Schaltfehlerschutzgerät der eingangs genannten Art anzugeben, das möglichst einfach aufgebaut und möglichst störunanfällig ist.

Das erfindungsgemäße Schaltfehlerschutzgerät, bei dem die zuvor aufgezeigte Aufgabe gelöst ist, ist durch die Merkmale des kennzeichnenden Teils des Anspruchs 1 gekennzeichnet.

Bei dem erfindungsgemäßen Schaltfehlerschutzgerät wird im ersten elektrischen Funktionsbereich die Ansteuerung der Schaltgeräte zusammengefaßt, der zweite elektrische Funktionsbereich dient der steuerungstechnischen und signaltechnischen Verarbeitung und der optische Funktionsbereich stellt die peripherie des erfindungsgemäßen Schaltfehlerschutzgeräts dar. Dabei wird der zweite elektische Funktionsbereich spannungsmäßig auf die bei modernen elektronischen Bauelementen üblichen Signalspannungen abgestellt, so daß in diesem zweiten elektrischen Funktionsbereich alle die Steuerung betreffenden Signalübermittlungen stattfinden können.

Die Ansprüche 2 ff. beschreiben besonders vorteilhafte und zweckmäßige Ausgestaltungen der Lehre der Erfindung, zu denen ergänzend noch folgendes zu sagen ist.

Die im optischen Funktionsbereich vorgesehenen Lichtsender können zweckmäßigerweise zu Optokopplern zusammengefaßt werden. Die zweckmäßige schaltungstechnische Verknüpfung verschiedener Lichtempfänger führt beispielsweise bei einer Reihenschaltung dazu, daß nur dann eine Schaltung im zweiten elektrischen Funktionsbereich erfolgt, wenn alle Lichtempfänger aktiviert sind, also

2

vom Licht bestrahlt werden. Man kann hier natürlich auch wahlweise eine elektronische Umkehrstufe (Inverter) nachschalten, so daß ein gerade umgekehrtes Schaltverhalten erzielt wird.

Lichtleitkabel dienen insbesondere der Übertragung von Signalen über größere Strecken. Ein besonderer Anwendungsfall für Lichtleitkabel ist die steuerungstechnische Verbindung verschiedener Felder einer Schaltanlage miteinander. Die Lichtleitkabel können auch als Ringleitungen mit wahlweisen Einkopplungen und Auskopplungen ausgeführt werden, wie das für sich aus dem Stand der Technik schon bekannt ist. Wesentlich ist insgesamt, daß das im Rahmen des erfindungsgemäßen Schaltfehlerschutzgerätes verwendete Licht im sichtbaren Bereich, im Infrarotbereich oder sogar im Ultraviolettbereich liegen kann, wobei die jeweils passenden optoelektronischen Bauelemente wie Fototransistoren, Fotodioden, Laserdioden usw. zu verwenden sind.

Bei der schaltungstechnischen Variante gemäß Anspruch 4 ist eine Lichtsteuerung entsprechend dem Ruhestromprinzip verwirklicht. Sind die Lichtempfänger normalerweise für Umgebungslicht frei zugänglich, so sind sie also alle durchgeschaltet. Wird nun einem Lichtempfänger ein optoelektronischer Lichtsender oder das Ende eines Lichtleitkabels zugeordnet, so wird dieser Lichtempfänger optisch abgedeckt. Nunmehr ist dieser Lichtempfänger nicht mehr dauernd durchgeschaltet, sondern nimmt einen vom Licht des Lichtsenders bzw. des Lichtleitkabels abhängigen Schaltzustand ein. Diese schaltungstechnische Variante hat den Vorteil, daß nicht vorhandene Schaltgeräte einfach dadurch "berücksichtigt" werden können, daß der zugehörige Lichtempfänger bzw. die zugehörigen Lichtempfänger offen gelassen werden.

Durch die Verwendung eines Langlochs ist bei Verschiebung von benachbarten Kodierblenden die betroffene Kodierblende praktisch nicht vorhanden.

Grundsätzlich gilt, daß die Nachbildungsantriebe zur Verschiebung der Kodierblenden miniaturisiert sein sollten, so daß beispielsweise Miniatur-Tauchankerspulen oder auch piezoelektrische Elemente in Frage kommen.

Eine Zuleitung nur eines Teils des einfallenden Lichts gemäß Anspruch 10 bringt für einen optoelektronischen Lichtempfänger den Vorteil, daß auch bei Verwendung eines lichtstarken Lichtsenders keine Übersteuerung oder gar Zerstörung erfolgt. Außerdem hat eine solche Reflexionsoptik für die Signalübertragung den Vorteil, daß der reflektierte Teil des Lichts beispielsweise in Lichtleitkabeln weitergeführt werden kann. Dadurch lassen sich einfach schaltungstechnische Verknüpfungen erzielen.

Wie im einzelnen eine solche Reflexionsoptik ausgestaltet werden kann, ergibt sich für einen Durchschnittsfachmann aus seinem durchschnittlichen Fachwissen. Grundsätzlich sei nur bemerkt, daß die Reflexionsoptik in ihrem Reflexionsgrad natürlich einstellbar sein kann, wozu sich beispielsweise ein Blendensystem anbieten würde. Wenn man jedoch weiß, mit welchen Lichtintensitäten man bei den verwendeten Lichtsendern zu rechnen hat und wie sich beispielsweise die Intensität des Lichts einer Laserdiode durch Dämpfung entfernungsabhängig verringert, so läßt sich auch ein fest eingestellter Reflexionsgrad der Reflexionsoptik vertreten. Dies ist besonders elegant dadurch zu verwirklichen, daß die Reflexionsoptik durch die reflektierende Oberfläche eines Fototransistors gebildet ist, der als optoelektronischer Lichtempfänger dient.

Nach Anspruch 11 ist die Funktion des erfindungsgemäßen Schaltfehlerschutzgeräts nicht mehr von einem mechanischen Federelement im Nachbildungsantrieb abhängig, sondern alle Stellungen des Nachbildungsantriebs sind "aktiv" durch den elektrischen Schrittmotor vorgegeben. Der Einfachheit halber wird hier und im folgenden davon ausgegangen, daß der Nachbildungsantrieb die drei Stellungen "AUS", "LAUF" und "EIN" einnehmen kann. Grundsätzlich ist die Lehre der Erfindung aber auf diese drei Stellungen nicht beschränkt.

Bei der Ausgestaltung des Nachbildungsantriebs als elektrischer Schrittmotor mit den Stellungen "AUS", "LAUF" und "EIN" ergibt sich beispielsweise bei einem als Dreh-Schrittmotor ausgeführten Schrittmotor bei einer Volldrehung des Drehankers die Schrittfolge "AUS", "LAUF", "EIN", "LAUF", "AUS", "LAUF", ... Befindet sich der Anker also beispielsweise in der Stellung "AUS", so muß zwingend zunächst die Stellung "LAUF" angesteuert werden, selbst wenn eigentlich sofort die Stellung "EIN" angesteuert werden sollte. Bei unmittelbarer Ansteuerung der Stellung "EIN" aus der Stellung "AUS" bliebe nämlich der Anker in Ruhe, da die auf ihn wirkenden Magnetkräfte der beiden benachbarten "EIN"-Stellungen sich kompensierten. Dieses Problem ist erkannt worden und es wird bei dem Schaltfehlerschutzgerät nach Anspruch 12 gelöst. Hier wird nur die "LAUF" Stellung als Sollstellung des Schrittmotors zugelassen, wohingegen der Anker des Schrittmotors sowohl in der "AUS"-Stellung als auch in der "EIN"-Stellung die entsprechende Sollstellung des Schrittmotors nicht ganz erreicht. Dadurch ist sowohl in der "AUS"-Stellung als auch in der "EIN"-Stellung des Schrittmotors vorgegeben, in welcher Richtung sich der Anker bei einer unmittelbaren Ansteuerung der "EIN"-Stellung bzw. der "AUS"-Stellung bewegt. Damit erlaubt das Schaltfehlerschutzgerät in dieser Ausgestaltung die unmittelbare Ansteuerung der "EIN"-Stellung aus der "AUS"-Stellung und umgekehrt. Eine solche Ansteuerung ist beispielsweise dann notwendig, wenn sich das elektrische Schaltgerät und mit ihm der Nachbildungsantrieb in der "AUS"-Stellung befindet, dann die Versorgungsspannung ausfällt und während des Ausfalls der Versorgungsspannung das elektrische Schaltgerät von Hand in seine "EIN"-Stellung gebracht wird. Dann nämlich muß bei Wiederkehr der Versorgungsspannung der Nachbildungsantrieb sofort in die vom elektrischen Schaltgerät vorgegebene "EIN"-Stellung folgen.

Besonders zweckmäßige und vorteilhafte Ausgestaltungen und Weiterbildungen der Lehre der Erfindung werden nachfolgend im Zusammenhang mit der Erläuterung besonders bevorzugter Ausführungsbeispiele der Erfindung anhand der Zeichnung noch weiter erläutert. In der Zeichnung zeigt

Fig. 1 in stark schematisierter Darstellung ein Ausführungsbeispiel eines Schaltfehlerschutzgeräts in einer ersten Schaltstellung,

Fig. 2 das Schaltfehlerschutzgerät aus Fig. 1 in einer zweiten Schaltstellung,

Fig. 3 einen Nachbildungsantrieb mit einer Kodierblende als Stellungsmelder für ein Schaltfehlerschutzgerät nach Fig. 1,

Fig. 4 einen Ausschnitt aus einem Schaltfehlerschutzgerät nach Fig. 1 im Bereich einer Reflexionsoptik,

Fig. 5 schematisch die schaltungstechnische Verbindung eines elektrischen Schaltgeräts mit einer elektrischen Steuerungsschaltung zur Steuerung eines Nachbildungsantriebs im Rahmen eines Schaltfehlerschutzgeräts.

Fig. 6 ein Schaltbild einer elektrischen Steuerungsschaltung zur Steuerung des Nachbildungsantriebs,

Fig. 7 in schematischer, das Funktionsprinzip verdeutlichender Darstellung einen als Nachbildungsantrieb dienenden elektrischen Dreh-Schrittmotor und

Fig. 8 in Fig. 6 entsprechender Darstellung ein Schaltbild einer elektrischen Steuerungsschaltung zur Steuerung des Nachbildungsantriebs in einem weiteren Ausführungsbeispiel.

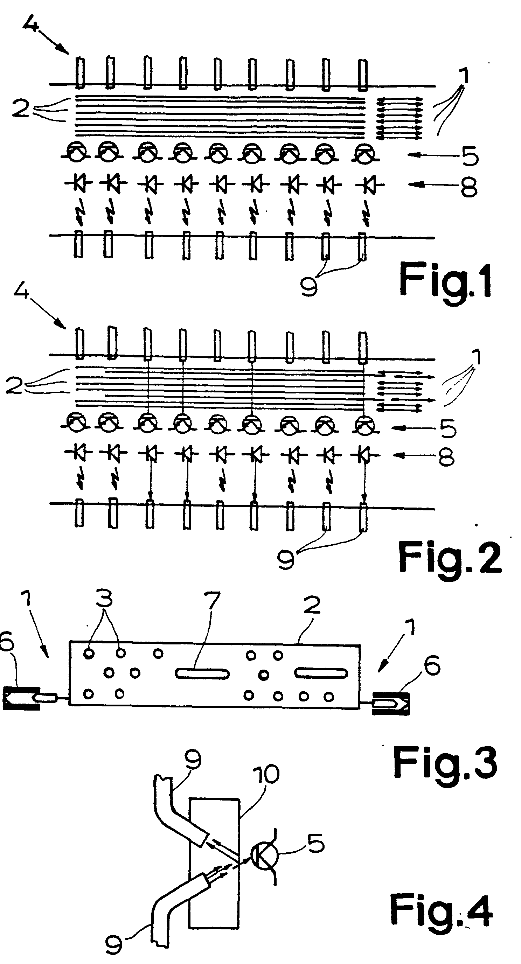

Das Schaltfehlerschutzgerät, dessen Funktionsschema in Fig. 1 dargestellt ist, ist für eine Schaltanlage mit acht Schaltgeräten bestimmt und weist je Schaltgerät einen als Doppelpfeil angedeuteten Nachbildungsan-, trieb 1 und mehrere von den Nachbildungsantrieben 1 betätigbare Schaltelemente auf. Jeder Nachbildungsantrieb 1 ist mit einer Kodierblende 2 verbunden, die in Fig. 1 nur schematisch als Strich dargestellt ist und als Stellungsmelder dient. Die Kodierblende 2 weist als Schaltelemente eine Mehrzahl von Lichtdurchtrittsöffnungen 3 auf, die in den Fig. 1 und 2 nicht, dafür aber in Fig. 3 besonders deutlich zu erkennen sind. Mehrere Kodierblenden 2 sind unmittelbar aufeinander angeordnet — gestapelt — und relativ zueinander linear verschiebbar.

Beidseits der gestapelten Kodierblenden 2 sind Lichtsender 4 und Lichtempfänger 5 angeordnet. Durch Verschieben der Kodierblenden 2 gegeneinander sind bestimmte Verriegelungsstellungen der Schaltgeräte darstellbar.

Wie Fig. 3 besser erkennen läßt, sind die Nachbildungsantriebe 1 zur Verschiebung der Kodierblenden 2 mit Miniatur-Tauchtankerspulen 6 versehen. Von Bedeutung ist, daß die acht Kodierblenden 2 mit den acht, Nachbildungsantrieben 1, die Lichtsender 4 und die Lichtempfänger 5 auf einer Schaltungsplatine zusammengefaßt sind. Fig. 3 zeigt, daß die Kodierblenden 2 an den für bestimmte Stellungsnachbildungen nicht benötigten Stellen mit Langlöchern 7 versehen sind. Schließlich zeigt Fig. 1 noch, daß die Lichtempfänger 5 als Fototransistoren ausgebildet sind und daß zur verstärkten Weitergabe des empfangenen Lichts jedem als Fototransistor ausgeführten Lichtempfänger 5 eine Leuchtdiode 8 nachgeschaltet ist.

Von den in Fig. 1 erkennbaren Lichtempfängern 5 werden Steuersignale einerseits an die Leuchtdioden 8, andererseits in eine nicht dargestellte elektrische Schaltung des zweiten elektrischen Funktionsbereichs gegeben. Optische Signale der Leuchtdioden 8 werden über Lichtleitkabel 9 zur weiteren Verarbeitung an andere Stellen der Schaltanlage weitergeleitet.

In Fig. 1 ist eine Stellung des Schaltfehlerschutzgeräts gezeigt, bei der von den Lichtsendern 4 zu den Lichtempfängern 5 kein Licht übermittelt wird. Die Lichtdurchtrittsöffnungen 3 der verschiedenen Kodierblenden 2 fluchten nirgends miteinander. Die Zickzackpfeile der Leuchtdioden 8 deuten hier nur an, daß prinzipiell hier eine Lichtaussendung möglich wäre.

Fig. 2 zeigt eine Schaltstellung des Schaltfehlerschutzgeräts, bei dem die zweite und die sechste Kodierblende 2 in ihre rechte Endposition verschoben worden sind. An vier Stellen fluchten nun die Lichtdurchtrittsöffnungen 3 miteinander, was durch durchgehende Linien angedeutet ist. Entsprechend werden auch von den Leuchtdioden 8 Lichtsignale in die Lichtleitkabel 9 eingekoppelt.

Fig. 4 läßt erkennen, daß einem optoelektronischen Lichtempfänger 5 eines Schaltfehlerschutzgeräts eine Reflexionsoptik 10 vorgeordnet ist, durch die nur ein Teil des einfallenden Lichts dem optoelektronischen Lichtempfänger 5 zugeleitet, der andere Teil jedoch in ein weiterführendes Lichtleitkabel 9 hinein reflektiert wird. Hier ist der Reflexionsgrad der Reflexionsoptik 10 einstellbar, was jedoch nicht näher dargestellt ist.

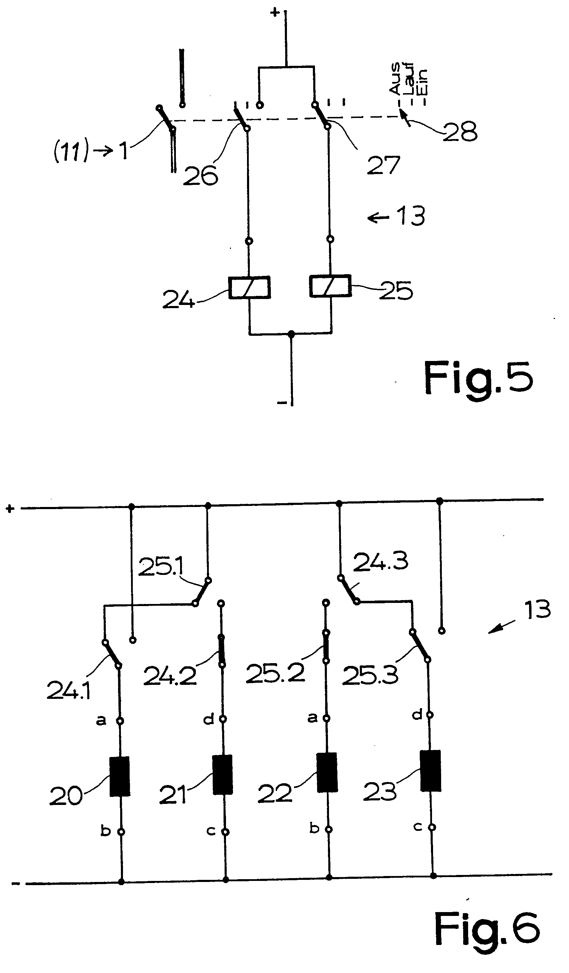

Die Fig. 5 bis 8 zeigen Details eines Schaltfehlerschutzgeräts in verschiedenen Ausführungsbeispielen, das für genau ein elektrisches Schaltgerät bestimmt und geeignet ist. Eine Mehrzahl dieser Schaltfehlerschutzgeräte bzw. eine Mehrzahl von Nachbildungsantrieben 1 dieser Schaltfehlerschutzgeräte können im zuvor erläuterten Sinne für eine größere Schaltanlage zusammengefaßt werden.

Zum besseren Verständnis werden die Fig. 5, 6 und 7 der Zeichnung zweckmäßigerweise gemeinsam herangezogen. Diese Figuren stellen schematisch die Schaltungsanordnung dar, die für ein einzelnes elektrisches Schaltgerät 11 bestimmt ist. In Fig. 5 ist dieses Schaltgerät 11 durch einen Schalter symbolisiert. Zu dem Schaltfehlerschutzgerät gehört ein Stellungsmelder 2 zur Meldung der Schaltstellung des Schaltgeräts 11, der in den Fig. 5 bis 8 nicht dargestellt ist, jedoch so aussehen kann wie in den Fig. 1 bis 4 dargestellt. Zum Antrieb dieses Stellungsmelders dient der Nachbildungsantrieb 1, der in Fig. 1 schon angedeutet worden ist und nun in Fig. 5 nochmals schematisch dargestellt wird.

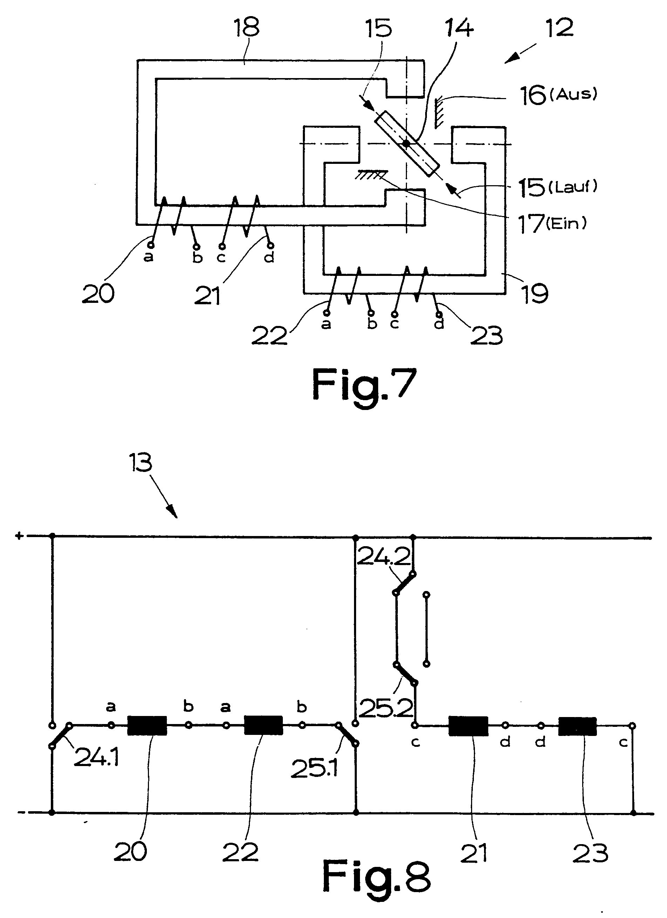

Zur Steuerung des Nachbildungsantriebs 1 dient eine Steuerungsschaltung 13, deren wesentliche Bestandteile in einem ersten Ausführungsbeispiel in Fig. 6 (und in einem zweiten Ausführungsbeispiel in Fig. 8) dargestellt sind. Mittels der Steuerungsschaltung 13 wird der Nachbildungsantrieb 1 entsprechend der Schaltstellung des Schaltgeräts 11 gesteuert, und zwar vorzugsweise und insoweit in der Zeichnung dargestellt in die drei Stellungen "AUS", "LAUF" und "EIN" gebracht. Dabei dient die "LAUF"-Stellung vorzugsweise gleichzeitig zur Störungsanzeige, was später noch genauer erläutert werden wird.

Fig. 5 zeigt schematisch die schaltungstechnische Verbindung des elektrischen Schaltgeräts 11 mit der elektrischen Steuerungsschaltung 13 für den Nachbildungsantrieb 1. Im einzelnen wird Fig. 5 später noch genauer erläutert. Entsprechendes gilt für die in Fig. 6 im ersten Ausführungsbeispiel dargestellte Steuerungsschaltung 13.

Zunächst soll anhand von Fig. 7 das Funktionsprinzip erläutert werden. Hier ist der Nachbildungsantrieb 1 als elektrischer Schrittmotor 12, im hier dargestellten Ausführungsbeispiel als Dreh-Schrittmotor, mit einem elektromagnetisch verstellbaren, vorzugsweise aus ferromagnetischem Material bestehenden Anker 14, hier einem Drehanker, ausgeführt. Der elektrische Schrittmotor 12 wird im dargestellten Ausführungsbeispiel mit Gleichstrom gespeist. Wesentlich ist, daß durch die Ausgestaltung des Nachbildungsantriebs 1 als elektrischer Schrittmotor 12 nicht nur, wie bislang bekannt, die "AUS"-Stellung und die "EIN"-Stellung des Nachbildungsantriebs 1 aktiv vorgegeben ist, sondern auch die dazwischen liegende "LAUF"-Stellung. Fig. 7 zeigt den Anker 14 in der "LAUF"-Stellung. Fig. 7 zeigt, daß im dargestellten Ausführungsbeispiel der Anker 14 des elektrischen Schrittmotors 12 in der "LAUF"-Stellung des Nachbildungsantriebs 1 eine durch eine Schrittraste 15 definierte Sollstellung einnimmt. Die Schrittraste 15 ist hier durch Pfeile angedeutet. Wie sie im einzelnen ausgestaltet ist, ob beispielsweise rein mechanisch, mechanisch und magnetisch oder nur magnetisch, vermag ein Durchschnittsfachmann auszuwählen.

Fig. 7 läßt erkennen, daß der Anker 14 in der "AUS"-Stellung und hier auch in der "EIN"-Stellung des Nachbildungsantriebs 1 an einem der entsprechenden Schrittraste 15 vorgelagerten Blockieranschlag 16 (AUS) bzw. 17 (EIN) zur Anlage kommt. Die Zeichnung macht deutlich, daß im hier dargestellten Ausführungsbeispiel der jeweilige Blockieranschlag 16, 17 bei 50% bis 80%, vorzugsweise bei etwa 65% der Schrittweite des Schrittmotors 12 angeordnet ist. Nicht zu erkennen ist dabei, daß der Anker 14 am jeweiligen Blockieranschlag 16, 17 durch eine Halteraste lösbar gehalten ist. Dadurch werden definierte Zustände erzielt, die unerwünschte Fehlfunktionen durch Stromschwankungen oder auch Stromausfälle verhindern.

Fig. 7 läßt in Verbindung mit den weiter oben angegebenen generellen Hinweisen erkennen, daß es vorteilhaft ist, daß der Anker 14 bezüglich der Sollstellungen des elektrischen Schrittmotors 12 für die "AUS"-Stellung und/oder die "EIN"-Stellung des Nachbildungsantriebs 1 immer etwas in Richtung der dazwischenliegenden "LAUF"-Stellung angeordnet ist. Dadurch kann ein direktes Umschalten aus der durch den Blockieranschlag 16 definierten "AUS"-Stellung in die durch den Blockieranschlag 17 definierte "EIN"-Stellung und umgekehrt ohne Zwischenhalt" in der "LAUF"-Stellung erfolgen. Die zuvor angegebenen Prozentwerte haben sich in durchgeführten Versuchen als besonders zweckmäßig herausgestellt.

Übliche Dreh-Schrittmotoren haben Drehwinkel von 5°, 10°, und insbesondere von 15° etc. Derartige Schrittmotoren sind hier ohne weiteres verwendbar. Fig. 7 zeigt demgegenüber, speziell auf ein leichtes Verständnis der vorliegenden Erfindung ausgerichtet, einen Schrittmotor 12, bei dem der Schrittwinkel 90° beträgt. An dieser Darstellung läßt sich das grundsätzliche Funktionsprinzip verdeutlichen.

Fig. 7 läßt erkennen, daß im dargestellten Ausführungsbeispiel der als Dreh-Schrittmotor ausgeführte Schrittmotor 12 zwei U-förmige Magnetkerne 18, 19 mit je mindestens einer Steuerwicklung 20, 21; 22, 23 aufweist. Der als Drehanker ausgeführte Anker 14 ist zwischen den Polflächen der U-förmigen Magnetkerne 18, 19 drehbar gelagert.

Weist jeder Magnetkern 18, 19 genau eine Steuerwicklung auf, so ist das Magnetfeld des jeweiligen Magnetkerns 18, 19 nur dadurch umpolbar, daß die Stromflußrichtung durch die Steuerwicklung umgekehrt wird. Dies ist schaltungstechnisch mitunter etwas schwierig zu verwirklichen. Deshalb zeigt Fig. 7, daß jeder Magnetkern 18, 19 genau zwei Steuerwicklungen 20, 21 bzw. 22, 23 aufweist und mittels der Steuerungsschaltung 13 das Magnetfeld des jeweiligen Magnetkerns 18, 19 durch Umschaltung von einer Steuerwicklung 20 bzw. 22 auf die andere Steuerwicklung 21 bzw. 23 und umgekehrt umpolbar ist. Im dargestellten Ausführungsbeispiel sind die Steuerwicklungen 20, 21 bzw. 22, 23 auf einen Magnetkern 18 bzw. 19 jeweils gleichsinnig gewickelt. Deshalb müssen sie in der Steuerungsschaltung 13 so angeschlossen sein, daß sie in unterschiedlichen Richtungen von Strom durchflossen werden. Selbstverständlich wäre es auch möglich, die Steuerwicklungen eines Magnetkerns gegensinnig zu wickeln, dann müßte das bei der Beschaltung entsprechend berücksichtigt werden.

Fig. 6 läßt die zuvor erläuterten Zusammenhänge, insbesondere hinsichtlich des Anschlusses der Steuerwicklungen 20, 21, 22, 23 im Rahmen der Steuerungsschaltung 13 dieses Ausführungsbeispiels deutlich erkennen. Entsprechendes gilt für das weitere Ausführungsbeispiel der Steuerungsschaltung 13, das in Fig. 8 dargestellt ist.

Setzt man voraus, daß die Steuerwicklungen 20, 21, 22, 23 alle einen im wesentlichen gleichen ohmschen Widerstand aufweisen, so läßt sich die Steuerungsschaltung 13 ohne weiteres so ausgestalten, daß zum Betrieb des Schrittmotors 12 mit einer ersten Versorgungsspannung die Steuerwicklungen 20, 21, 22, 23 jeweils für sich unmittelbar an die Versorgungsspannung schaltbar sind und daß zum Betrieb des Schrittmotors 12 mit einer zweiten, etwa doppelt so großen Versorgungsspannung jeweils die Reihenschaltung einer Steuerwicklung 20 bzw. 21 des ersten Magnetkerns 18 und einer Steuerwicklung 22 bzw. 23 des zweiten Magnetkerns 19 an die Versorgungsspannung schaltbar ist. Die Versorgungsspannung der Steuerungsschaltung 13 im Ausführungsbeispiel der Fig. 8 ist also etwa doppelt so groß wie die Versorgungsspannung der Steuerungsschaltung 13 im Ausführungsbeispiel in Fig. 6. Beispielsweise beträgt die Versorgungspannung in Fig. 6 etwa 24 V Gleichspannung, in Fig. 8 etwa 48 V Gleichspannung.

Weiter oben ist darauf hingewiesen worden, daß Fig. 5 der Zeichnung später noch genauer erläutert werden soll. Hierzu ist nun zu bemerken, daß hier die Steuerungsschaltung 13 zur Steuerung des als elektrischer Schrittmotor 12 ausgeführten Nachbildungsantriebs 1 zwei Relais aufweist, daß die Erregerwicklungen 24, 25 der Relais jeweils zusammen mit entsprechenden, vom Schaltgerät 11 her betätigbaren Kontakten 26, 27 zueinander parallelgeschaltet sind und daß in der " AUS"-Stellung und in der "EIN"-Stellung des Nachbildungsantriebs 1 jeweils nur die Erregerwicklung 24 bzw. 25 eines Relais stromdurchflossen ist. Fig. 5 läßt dabei deutlich erkennen, daß vom elektrischen Schaltgerät 11 neben den Kontakten 26, 27 noch ein Anzeigeelement 28 zur unmittelbaren Anzeige der jeweiligen Schaltstellung a Schaltgerät 11 selbst betätigbar ist. Anstelle von Relais oder Schützen kommen auch elektronische oder optoelektronische Schalter moderner Bauart in Frage. In der in Fig. 5, dargestellten "AUS"-Stellung ist die Erregerwicklung 25 des zweiten Relais stromdurchflossen, die Erregerwicklung 24 des ersten Relais ist stromlos. In der "LAUF"-Stellung sind beide Erregerwicklungen 24, 25 stromlos, während in der "EIN"-Stellung die Erregerwicklung 24 des ersten Relais stromdurchflossen ist, die Erregerwicklung 25 des zweiten Relais jedoch stromlos bleibt.

Fig. 5 läßt erkennen, daß die Erregerwicklungen 24, 25 der Relais an eine eigene Versorgungsgleichspannung angeschlossen sind, die nicht mit der Versorgungsgleichspannung der in Fig. 6 und Fig. 8 dargestellten Steuerungsschaltung 13 identisch sein muß. Diese Konstruktion bedeutet, daß die Erregerwicklungen 24, 25 der Relais schaltungstechnisch im ersten elektrischen Funktionsbereich mit einer Versorgungsspannung von beispielsweise 60 V, 110 V, 220 V, 250 V und die Kontakte 24.1, 24.2, 24.3, 25.1, 25.2, 25.3 der Relais mit den darüber angesteuerten Steuerentwicklungen 20, 21, 22, 23 des Schrittmotors 12 in dem galvanisch vom ersten elektrischen Funktionsbereich getrennten zweiten elektrischen Funktionsbereich mit einer anderen Versorgungsspannung von beispielsweise 12 V, 24 V, 48 V angeordnet sind. Die Kontakte 24.1, 24.2 und 24.3 in Fig. 6 werden von der Erregerwicklung 24 des ersten Relais betätigt und sind in Fig. 6, der üblichen Konvention entsprechend, in der Lage dargestellt, in der sie sich bei stromloser Erregerwicklung 24 befinden. Entsprechendes gilt für die Kontakte 25.I, 25.2 und 25.3, die von der Erregerwicklung 25 des zweiten Relais betätigt werden. Fig. 6 zeigt also praktisch die "LAUF"-Stellung der Steuerungsschaltung 13 bzw. eine in gleicher Weise identifizierte Störungsstellung. Dabei sind die Steuerentwicklungen 20 und 23 stromdurchflossen, was zu der in Fig. 7 dargestellten "LAUF"-Stellung des als Schrittmotor 12 ausgeführten Nachbildungsantriebs 1 führt.

Die nachfolgend wiedergegebene Tabelle gibt die Zustände der Erregerwicklungen 24, 25 (A = abgefallen, E = erregt) und der Steuerwicklungen 20, 21, 22, 23 (die Pfeilrichtung gibt die Richtung des Stromflusses in Fig. 7 an) für das Ausführungsbeispiel aus Fig. 6 an:

|  | 24 | 25 | 20 | 21 | 22 | 23 |
|---|---|---|---|---|---|---|
| AUS | A | E |  | ← |  | ← |
| LAUF | A | A | → |  |  | ← |
| EIN | E | A | → |  | → |  |
| GESTÖRT | A | A | → |  |  | ← |
| GESTÖRT | E | E | → |  |  | ← |

Für das in Fig. 8 dargestellte Ausführunosbeispiel in Verbindung mit dem in Fig. 7 dargestellten Ausführungsbeispiel eines Schrittmotors 12 wird nachfolgend eine entsprechende Tabelle angegeben:

|  | 24 | 25 | 20 | 21 | 22 | 23 |
|---|---|---|---|---|---|---|
| AUS | A | E | ← |  | ← |  |
| LAUF | A | A |  | → |  | ← |
| EIN | E | A | → |  | → |  |
| GESTÖRT | A | A |  | → |  | ← |
| GESTÖRT | E | E |  | → |  | ← |

Durch die galvanische Trennung der elektrischen Funktionsbereiche wird eine weiter verbesserte Störfestigkeit des erfindungsgemäßen Schaltfehlerschutzgeräts erreicht.

Betrachtet man die Fig. 6 und 8 und die zugehörigen, zuvor wiedergegebenen Tabellen, so erkennt man, daß in den dargestellten Ausführungsbeispielen sowohl in der "LAUF"-Stellung des Nachbildungsantriebs 1 als auch bei Stromlosigkeit beider Erregerwicklungen 24, 25 der Relais als auch bei Stromführung beider Erregerwicklungen 24, 25 der Relais stets dieselben Steuerwicklungen 20, 23 bzw. 21, 23 des Schrittmotors 12, stromdurchflossen sind.

## Patentansprüche

1. Schaltfehlerschutzgerät für eine Schaltanlage mit mehreren elektrischen Schaltgeräten, mit einem optische Schaltelemente (3) aufweisenden, optisch arbeitenden Stellungsmelder (2) je Schaltgerät und einem Nachbildungsantrieb (1) für den Stellungsmelder (2), wobei die Nachbildungsantriebe (1), Stellungsmelder (2) und Schaltelemente (3) als optischer Funktionsbereich zusammengefaßt sind, und im optischen Funktionsbereich die Aussendung und der Empfang von zu übermittelnden Signalen, die Signalkodierung und die Stellungsnachbildung erfolgen, dadurch gekennzeichnet, daß außerdem optischen Funktionsbereich zwei elektrische Funktionsbereiche vorgesehen sind, daß der erste elektrische Funktionsbereich mit normalen Steuerspannungen von 60 V, 110 V, 220 V, 250 V arbeitet und dort die Steuersignale für die Schaltgeräte verarbeitbar sind und daß der zweite elektrische Funktionsbereich mit Steuerspannungen von 5 V bis 48 V arbeitet und dort interne elektronische Steuersignale verarbeitbar sind.

2. Schaltfehlerschutzgerät nach Anspruch 1, dadurch gekennzeichnet, daß in dem optischen Funktionsbereich optoelektronische Lichtsender (4) und Lichtempfänger (5) vorgesehen sind und die elektronische Seite der optoelektronischen Lichtsender (4) und Lichtempfänger (5) im zweiten elektrischen Funktionsbereich liegt und daß, vorzugsweise, verschiedene optoelektronische Lichtempfänger (5) zur Bildung von Verriegelungsschaltungen miteinander schaltungstechnisch verknüpft, insbesondere in Reihe geschaltet sind.

3. Schaltfehlerschutzgerät nach Anspruch 1 oder 2, dadurch gekennzeichnet, daß die beiden elektrischen Funktionsbereiche an voneinander völlig getrennte Spannungsversorgungen angeschlossen sind, daß aber vorzugsweise die optoelektronischen Lichtsender (4) und/oder Lichtempfänger (5) in Notfällen auch mit der Spannung des ersten elektrischen Funktionsbereichs oder einer daraus abgeleiteten Spannung betreibbar sind, insbesondere nämlich die Lichtempfänger (5) als Optothyristoren ausgebildet sind.

4. Schaltfehlerschutzgerät nach Anspruch 2 oder 3, dadurch gekennzeichnet, daß die optoelektronischen Lichtempfänger (5) bei Lichteinfall durchgeschaltet sind, daß eine die optoelektronischen Lichtempfänger (5) dauernd beleuchtende, vorzugsweise an die Spannungsversorgung des zweiten elektrischen Funktionsbereichs angeschlossene, Kunstlichtquelle vorgesehen ist und daß der Lichteinfall von der Kunstlichtquelle auf die optoelektronischen Lichtempfänger (5) dadurch und dann unterbrochen ist, wenn der Lichtempfänger (5) durch die entsprechende Zuordnung eines optoelektronischen Lichtsenders (4) oder eines Lichtleitkabels optisch abgedeckt ist.

5. Schaltfehlerschutzgerät nach einem der Ansprüche 1 bis 4, dadurch gekennzeichnet, daß jeder Nachbildungsantrieb (1) mit einer als Stellungsmelder dienenden Kodierblende (2) verbunden ist und die Kodierblende (2) als Schaltelemente eine Mehrzahl von Lichtdurchtrittsöffnungen (3) aufweist, daß mehrere Kodierblenden (2) unmittelbar aufeinander oder hintereinander gestapelt und relativ zueinander — horizontal oder vertikal — linear verschiebbar oder um eine gemeinsame Achse drehbar sind, daß beidseits der Kodierblenden (2) Lichtsender (4) und Lichtempfänger (5) angeordnet sind, daß durch Schieben oder Drehen der Kodierblenden (2) gegeneinander bestimmte Verriegelungsstellungen der Schaltgeräte darstellbar sind und daß, vorzugsweise, die Kodierblenden (2) an den für bestimmte Stellungsnachbildungen nicht benötigten Stellen mit Langlöchern (7) versehen sind.

6. Schaltfehlerschutzgerät nach Anspruch 5, dadurch gekennzeichnet, daß jeweils sechs bis zehn, vorzugsweise acht Kodierblenden (2) mit den Nachbildungsantrieben (1), Lichtsendern (4) und Lichtempfängern (5) auf einer Schaltungsplatine zusammengefaßt sind.

7. Schaltfehlerschutzgerät nach Anspruch 5 oder 6, dadurch gekennzeichnet, daß eine extern erkennbare, vorzugsweise optoelektronische, Stellungsanzeige für jede der Kodierblenden (2) vorgesehen, und, vorzugsweise, auf einem Frontwinkel der Schaltungsplatine angeordnet ist.

8. Schaltfehlerschutzgerät nach einem der Ansprüche 5 bis 7, dadurch gekennzeichnet, daß die Dicke der Kodierblenden (2) weniger als 0,1 mm, vorzugsweise etwa 0,05 mm, beträgt und daß die Kodierblenden (2) aus Metall bestehen.

9. Schaltfehlerschutzgerät nach einem der Ansprüche 5 bis 8, dadurch gekennzeichnet, daß die Lichtempfänger (5) als Fototransistoren ausgebildet sind und daß zur verstärkten Weitergabe des empfangenen Lichts jedem als Fototransistor ausgebildeten Lichtempfänger (5) eine Leuchtdiode (8) oder eine Laserdiode nachgeschaltet ist.

10. Schaltfehlerschutzgerät nach Anspruch 2 und ggf. einem der Ansprüche 3 bis 9, dadurch gekennzeichnet, daß jedem optoelektronischen Lichtempfänger (5) eine Reflexionsoptik (10) vorgeordnet und über die Reflexionsoptik (10) nur ein Teil des einfallenden Lichts dem optoelektronischen Lichtempfänger (5) zuleitbar, der andere Teil des einfallenden Lichts aber, ggf. in ein weiterführendes

7

Lichtleitkabel (9) hinein, reflektierbar ist, daß, vorzugsweise, der Reflexionsgrad der Reflexionsoptik (10) einstellbar ist oder daß, vorzugsweise, die Reflexionsoptik (10) durch die reflektierende Oberfläche eines den optoelektronischen Lichtempfänger (5) darstellenden Fototransistors gebildet ist.

11. Schaltfehlerschutzgerät nach einem der Ansprüche 1 bis 10, dadurch gekennzeichnet, daß der Nachbildungsantrieb (1) als elektrischer Schrittmotor (12), insbesondere Dreh-Schrittmotor, mit einem elektromagnetisch verstellbaren, vorzugsweise aus ferromagnetischem Material bestehenden Anker (14), insbesondere Drehanker, ausgeführt ist.

12. Schaltfehlerschutzgerät nach Anspruch 11, wobei der Nachbildungsantrieb () in die drei Stellungen "AUS", "LAUF" und "EIN" bringbar ist und, vorzugsweise, die "LAUF"-Stellung gleichzeitig zur Störungsmeldung dient, dadurch gekennzeichnet, daß der Anker (14) des elektrischen Schrittmotors (12) in der "LAUF"-Stellung des Nachbildungsantriebs (1) eine durch eine Schrittraste (15) definierte Sollstellung einnimmt, jedoch in der "AUS"-Stellung und/oder in der "EIN"-Stellung des Nachbildungsantriebs (1) an einem der entsprechenden Schrittraste (15) vorgelagerten Blockieranschlag (16 bzw. 17) zur Anlage kommt, daß, vorzugsweise, der Blockieranschlag (16 bzw. 17) bei 50% bis 80%, insbesondere bei etwa 65% der Schrittweite des Schrittmotors (12) angeordnet ist und daß, vorzugsweise, der Anker (14) am Blockieranschlag (16 bzw. 17) durch eine Halteraste od. dgl. lösbar gehalten ist.

13. Schaltfehlerschutzgerät nach Anspruch 11 oder 12, dadurch gekennzeichnet, daß der als Dreh-Schrittmotor ausgeführte Schrittmotor (12) mindestens zwei U-förmig ausgebildete Magnetkerne (18, 19) mit je mindestens einer Steuerwicklung (20, 21; 22, 23) aufweist und der als Drehanker ausgeführte Anker (14) zwischen den Polflächen der Magnetkerne (18, 19) drehbar gelagert ist.

14. Schaltfehlerschutzgerät nach Anspruch 13, wobei eine elektrische Steuerungsschaltung zur Steuerung des achbildungsantriebs (1) entsprechend der Schaltstellung des jeweiligen Schaltgeräts vorgesehen ist, dadurch gekennzeichnet, daß jeder Magnetkern (18, 19) zwei Steuerwicklungen (20, 21 bzw. 22, 23) aufweist und daß mittels der Steuerungsschaltung (13) das Magnetfeld des jeweiligen Magnetkerns (18, 19) durch Umschaltung von einer Steuerwicklung (20 bzw. 22) auf die andere Steuerwicklung (21 bzw. 23) und umgekehrt umpolbar ist und daß, vorzugsweise, die Steuerwicklungen (20, 21, 22, 23) alle einen im wesentlichen gleichen ohmschen Widerstand aufweisen.

15. Schaltfehlerschutzgerät nach Anspruch 14, dadurch gekennzeichnet, daß zum Betrieb des Schrittmotors (12) mit einer ersten Versorgungsspannung die Steuerwicklungen (20, 21, 22, 23) jeweils für sich unmittelbar an diese Versorgungsspannung schaltbar sind und daß zum Betrieb des Schrittmotors (12) mit einer zweiten, etwa doppelt so großen Versorgungsspannung jeweils die Reihenschaltung einer Steuerwicklung (20 bzw. 21) des ersten Magnetkerns (18) und einer Steuerwicklung (22 bzw. 23) des zweiten Magnetkerns (19) an die zweite Versorgungsspannung schaltbar ist.

16. Schaltfehlerschutzgerät nach einem der Ansprüche 11 bis 15, wobei eine elektrische Steuerschaltung zur Steuerung des Nachbildungsantriebs (1) entsprechend des jeweiligen Schaltgeräts vorgesehen ist und wobei der Nachbildungsantrieb (1) in die drei Stellungen "AUS", "LAUF" und "EIN" bringer ist und, vorzugsweise, die "LAUF"-Stellung gleichzeitig zur Störungsmeldung dient, dadurch gekennzeichnet, daß die Steuerungsschaltung (13) zur Steuerung des als elektrischer Schrittmotor (12) ausgeführten Nachbildungsantriebs (1) zwei Relais aufweist, daß die Erregerwicklungen (24, 25) der Relais jeweils zusammen mit entsprechenden, vom Schaltgerät (11) her betätigbaren Kontakten (26, 27) zueinander parallelgeschaltet sind, daß in der "AUS"-Stellung und in der "EIN"-Stellung des Nachbildungsantriebs (1) jeweils nur die Erregerwicklung (24 bzw. 25) eines Relais stromdurchflossen ist und daß, vorzugsweise, die Erregerwicklungen (24, 25) der Relais schaltungstechnisch im ersten elektrischen Funktionsbereich mit einer Versorgungsspannung von 60 V, 110 V, 220 V, 250 V und die Kontakte (24.1, 24.2, 24.3, 25.1, 25.2, 25.3) der Relais mit den darüber angesteuerten Steuerwicklungen (20, 21, 22, 23) des Schrittmotors (12) im galvanisch vom ersten elektrischen Funktionsbereich getrennten zweiten elektrischen Funktionsbereich mit einer anderen Versorgungsspannung von 12 V, 24 V, 48 V angeordnet sind.

17. Schaltfehlerschutzgerät nach Anspruch 16, dadurch gekennzeichnet, daß sowohl in der "LAUF"-Stellung des Nachbildungsantriebs (1) als auch bei Stromlosigkeit beider Erregerwicklungen (24, 25) der Relais als auch bei Stromführung beider Erregerwicklungen (24, 25) der Relais stets dieselben Steuerwicklungen (20, 23 bzw. 21, 23) des Schrittmotors (12) stromdurchflossen sind.

**Revendications**

1. Appareil de protection contre des erreurs de commutation destiné à une installation de distribution électrique munie de plusieurs appareils de distribution électriques, comprenant, par appareil de distribution, un avertisseur de position (2) à fonctionnement optique présentant des éléments de circuit optiques (3), ainsi qu'un entraînement d'équilibrage (1) destiné à l'avertisseur de position (2); les entraînements d'équilibrage (1), les avertisseurs de position (2) et les éléments de circuit (3) sont regroupés sous forme de zone de fonctionnement optique; l'émission et la réception de signaux à transmettre, le codage des signaux et l'équilibrage de position s'effectuent dans la zone de fonctionnement optique, caractérisé en ce que, en dehors de la zone de fonctionnement optique on prévoit deux zones de fonctionnement électrique, en ce que la première zone de fonctionnement électrique travaille avec des tensions de commande normales de 60 V, 110 V, 220 V, 250 V, le traitement de signaux de commande destinés aux appareils de distribution pouvant s'effectuer dans cette première zone, et en ce que la seconde zone de fonctionnement électrique, travaille avec des tensions de commande allant de 5 V à 48 V, des signaux de commande électroniques internes pouvant être traités dans cette seconde zone.

2. Appareil de protection contre des erreurs de commutation selon la revendication 1, caractérisé en ce qu'on prévoit, dans la zone de fonctionnement optique, des photoémetteurs (4) et des photorécepteurs (5) opto-électroniques le côté électronique des photoémetteurs (4) et des photorécepteurs (5) opto-électroniques se trouvant dans la seconde zone de fonctionnement électrique et en ce que, de préférence, on relie différents photorécepteurs (5) optoélectroniques l'un à l'autre selon une technique de montage, en particulier, on les monte en série, afin de constituer des circuits de verrouillage.

3. Appareil de protection contre des erreurs de commutation selon la revendication 1 ou 2, caractérisé en ce que les deux zones de fonctionnement électrique sont raccordées à des alimentations de courant complètement séparées l'une de l'autre, mais, en ce que, de préférence, en cas d'urgence, on peut actionner les photoémetteurs (4) et/ou les photorécepteurs (5) opto-électroniques également avec la tension de la première zone de fonctionnement électrique ou avec une tension qui en dérive, les photorécepteurs (5) étant notamment réalisés, en particulier, en forme d'optothyristors.

4. Appareil de protection contre des erreurs de commutation selon la revendication 2 ou 3, caractérisé en ce que les photorécepteurs (5) opto-électroniques sont commutés par l'incidence de la lumière, en ce que l'on prévoit une source de lumière artificielle éclairant en continu les photorécepteurs (5) opto-électroniques, cette source de lumière artificielle étant, de préférence, raccordée à l'alimentation de courant de la seconde zone de fonctionnement électrique, et en ce que l'incidence de la lumière provenant de la source de lumière artificielle sur les photorécepteurs (5) opto-électroniques est seulement interrompue lorsque le photorécepteur (5) est optiquement masqué par l'agencement correspondant d'un photoémetteur (4) opto-électronique ou d'un câble photoconducteur.

5. Appareil de protection contre des erreurs de commutation selon l'une quelconque des revendications 1 à 4, caractérisé en ce que chaque entraînement d'équilibrage (1) est relié à un obturateur de codage (2) faisant office d'avertisseur de position et l'obturateur de codage (2) présente, comme éléments de circuit, plusieurs ouvertures de passage (3) pour la lumière; en ce qu'on empile plusieurs obturateurs de codage (2) les uns directement sur les autres ou les uns directement derrière les autres, ces obturateurs de codage pouvant coulisser linéairement — horizontalement ou verticalement — les uns par rapport aux autres ou bien pouvant effectuer des rotations autour d'un axe commun; en ce que des photoémetteurs (4) et des photorécepteurs (5) sont disposés de part et d'autre des obturateurs de codage (2); en ce qu'on peut constituer des positions de verrouillage des appareils de distribution, à destinations opposées en procédant au coulissement ou au pivotement des obturateurs de codage (2); et en ce que, de préférence, les obturateurs de codage (2) sont munis de trous oblongs (7) aux endroits non requis pour des équilibrages de position déterminés.

6. Appareil de protection contre des erreurs de commutation selon la revendication 5, caractérisé en ce que chaque plaquette de montage comprend six à dix, de préférence huit obturateurs de codage (2) conjointement avec les entraînements d'équilibrage (1), les photoémetteurs (4) et les photorécepteurs (5).

7. Appareil de protection contre des erreurs de commutation selon la revendication 5 ou 6, caractérisé en ce que l'on prévoit pour chacun des obturateurs de codage (2), un indicateur de position reconnaissable de l'extérieur, de préférence, opto-électronique, et en ce qu'il est, de préférence, disposé sur un angle frontal de la plaquette de montage.

8. Appareil de protection contre des erreurs de commutation selon l'une quelconque des revendications 5 à 7, caractérisé en ce que l'épaisseur des obturateurs de codage (2) est inférieure à 0,1 mm, de préférence, d'environ 0,05 mm, et en ce que les obturateurs de codage (2) sont constitués de métal.

9. Appareil de protection contre des erreurs de commutation selon l'une quelconque des revendications 5 à 8, caractérisé en ce que les photorécepteurs (5) sont réalisés en phototransistors et en ce que, pour renforcer la retransmission de la lumière perçue, à la suite de chaque photorécepteur (5) réalisé en phototransistor, on intercale une photodiode (8) ou une diode laser.

10. Appareil de protection contre des erreurs de commutation selon la revendication 2 et éventuellement selon l'une quelconque des revendications 3 à 9, caractérisé en ce qu'on dispose un système d'optique de réflection (10) avant chaque photorécepteur (5) opto-électronique, seulement une partie de la lumière incidente pouvant être acheminée aux photorécepteurs (5) opto-électroniques par l'intermédiaire du système optique de réflection (10), tandis que l'autre partie de la lumière incidente peut être réfléchie éventuellement au sein d'un câble photoconducteur (9) de continuation; en ce que, de préférence, on peut régler le degré de réflection du système optique (10) destiné à cet effet ou en ce que, de préférence, le système optique de réflection (10) est réalisé par la surface réfléchissante d'un phototransistor constituant le photorécepteur (5) opto-électronique.

11. Appareil de protection contre des erreurs de commutation selon un quelconque des revendications 1 à 10, caractérisé en ce que l'entraînement d'équilibrage (1) est réalisé en moteur électrique en pas à pas (12), en particulier, en moteur vireur en pas à pas, muni d'un induit (14), en particulier, un induit rotatif, pouvant être réglé électromagnétiquement, de préférence, constitué d'une matière ferromagnétique.

12. Appareil de protection contre des erreurs de commutation selon la revendication 11, dans lequel on peut amener l'entraînement d'équilibrage (1) dans les trois positions "AUS" (= arrêt), "LAUF" (= circulation) et "EIN" (= marche), de préférence, la position "LAUF" faisant en même temps office

## EP 0 162 376 B1

d'avertissement de panne, caractérisé en ce que l'induit (14) du moteur électrique en pas à pas (12), dans la position "LAUF" de l'entraînement d'équilibrage (1), occupe une position de consigne définie par une encoche du pas (15), tandis qu'il vient buter, dans la position "AUS" et/ou dans la position "EIN" de l'entraînée d'équilibrage (1), contre une butée de blocage (16) ou (17) prémontée dans une des encoches de pas correspondantes (15), en ce que, de préférence, la butée de blocage (16 ou 17) est disposée selon une valeur allant de 50% à 80%, en particulier à environ 65% du pas de progression du moteur en pas à pas (12) et en ce que, de préférence, l'induit (14) est maintenu de manière amovible contre la butée de blocage (16 ou 17) à l'intervention d'une encoche d'arrêt ou analogues.

13. Appareil de protection contre des erreurs de commutation selon la revendication 11 ou 12, caractérisé en ce que le moteur en pas à pas (12) réalisé en moteur vireur en pas à pas présente au moins deux noyaux magnétiques (18, 19) réalisés en U munis d'au moins un enroulement de commande (20, 21; 22, 23); l'induit (14) réalisé en induit rotatif est monté en rotation entre les faces polaires des noyaux magnétiques (18, 19).

14. Appareil de protection contre des erreurs de commutation selon la revendication (13), dans lequel on prévoit un circuit électrique de commande pour la commande de l'entraînement d'équilibrage (1) de manière correspondante à la position de commutation de l'appareil de distribution respectif, caractérisé en ce que chaque noyau magnétique (18, 19) présente deux enroulements de commande (20, 21 ou 22, 23) et en ce que, au moyen du circuit de commande (13), on peut inverser la polarité du champ magnétique du noyau magnétique respectif (18, 19) en commutant un enroulement de commande (20 ou 22) à l'autre entraînement (21 ou 23) et inversement et en ce que, de préférence, tous les enroulements de commande (20, 21, 22, 23) présentent une résistance ohmique essentiellement égale.

15. Appareil de protection contre des erreurs de commutation selon la revendication 14, caractérisé en ce que, pour l'entraînement du moteur en pas à pas (12) avec une première tension d'alimentation, les enroulements de commande (20, 21, 22, 23) peuvent être chaque fois couplés, à part, directement à cette tension d'alimentation et en ce que, pour l'entraînement du moteur en pas à pas (12) avec une seconde tension d'alimentation à peu près double, on peut commuter chaque fois le montage en série d'un enroulement de commande (20 ou 21) du premier noyau magnétique (18) et d'un enroulement de commande (22 ou 23) du second noyau magnétique (19), à la seconde tension d'alimentation.

16. Appareil de protection contre des erreurs de commutation selon l'une quelconque des revendications 11 à 15, dans lequel on prévoit un circuit électrique de commande destiné à la commande de l'entraînement d'équilibrage (1) de manière correspondante à la position de commutation de l'appareil de distribution respectif et dans lequel, on peut amener l'entraînement d'équilibrage (1) dans les trois positions "AUS", "LAUF" et "EIN", la position "LAUF" faisant, de préférence, également office d'avertissement de panne, caractérisé en ce que le circuit de commande (13) destiné à la commande de l'entraînement d'équilibrage (1) réalisé en moteur électrique en pas à pas (12) présente deux relais, en ce que les enroulements d'excitation (24, 25) des relais sont chaque fois montés en parallèle l'un par rapport à l'autre conjointement avec des contacts correspondants (26, 27) actionnables à partir de l'appareil de distribution (11), en ce que dans la position "AUS" et dans la position "EIN" de l'entraînement d'équilibrage (1), chaque fois, seulement l'enroulement d'excitation (24 ou 25) d'un relais est traversé par le courant et en ce que, de préférence, les enroulements d'excitation (24, 25) des relais sont disposés selon une technique de montage dans la première zone de fonctionnement électrique munie d'une tension d'alimentation de 60 V, 110 V, 220 V, 250 V, les contacts (24.1, 24.2, 24.3, 25.1, 25.2, 25.3) des relais avec les enroulements de commande (20, 21, 22, 23) du moteur en pas à pas (12), excités par leur intermédiaire étant disposés dans la seconde zone de fonctionnement électrique séparée par galvanisation de la première zone de fonctionnement électrique, cette seconde zone étant munie d'une autre tension d'alimentation de 12 V, 24 V, 48 V.

17. Appareil de protection contre des erreurs de commutation selon la revendication 16, caractérisé en ce que, dans la position "LAUF" de l'entraînement d'équilibrage (1) comme dans le cas d'absence de courant au sein des enroulements d'excitation (24, 25) des relais, comme encore dans le cas de conduction de courant au sein des deux enroulements d'excitation (24, 25) des relais, ce sont toujours les mêmes enroulements de commande (20, 22 ou 21, 23) du moteur en pas à pas (12) qui sont traversés par le courant.

## Claims

1. A switching error protection device for a switching installation with several electrical switching appliances, with an optically-working position indicator (2) for each switching appliance, possessing optical switching units (3), and with a replica drive (1) for the position indicator (2), in which the replica drive (1), the position indicator (2) and the switching units (3) are combined as an optical operation sector, and the emission and reception of signals to be transmitted, the coding of the signals and the position replication take place in the optical operation sector, characterized in that apart from the optical operation sector two electrical operation sectors are provided, that the first electrical operation sector works with normal control voltages of 60 V, 110 V, 220 V or 250 V and the control signals for the switching appliances can be processed in that sector, and that the second electrical operation sector works with control voltages of 5 V to 48 V and in that sector the internal electronic control signals can be processed.

2. A switching error protection device according to Claim 1, characterized in that optical-electronic light-transmitters (4) and light-receivers (5) are provided in the optical operation sector and the electronic side of the optical-electronic light-transmitters (4) and light-receivers (5) is in the second electrical operation sector and that, preferably, various optical-electronic light-receivers (5) are connected together in a circuit to form locking circuits, and are particularly connected in series.

3. A switching error protection device according to Claim 1 or 2. characterized in that the two electrical operation sectors are connected to power supplies that are completely isolated from one another, but that preferably the optical-electronic light-transmitters (4) and/or light-receivers (5) can in emergencies be driven by the voltage of the first electrical operation sector or by a voltage derived therefrom, and especially that the light-receivers (5) are constructed as optical thyristors.

4. A switching error protection device according to Claim 2 or 3, characterized in that the optical-electronic light-receivers (5) are switched through when light falls on them, that an artificial light source is provided, preferably connected to the voltage supply of the second electrical operation sector and permanently illuminating the optical-electronic light-receivers (5) and that the incident light on the optical-electronic light-receiver (5) from the artificial light source is interrupted as and when the light-receiver (5) is optically screened by the appropriate positioning of an optical-ekectronic light-transmitter (4) or of an optical cable.

5. A switching error protection device according to one of Claims 1 to 4, characterized in that each replica drive (1) is associated with a coding shutter (2) serving as position indicator and the coding shutter (2) possesses as switching units a plurality of apertures (3) through which light can pass, that several coding shutters (2) are stacked directly on top of one another or behind one another and are linearly slidable relative to one another — horizontally or vertically — or can be rotated around a common axis, that light-transmitters (4) and light-receivers (5) are arranged on both sides of the coding shutters (2), that by sliding or rotating the coding shutters (2) against one another definite locking positions of the switching appliances can be represented and that, preferably, the coding shutters (2) are provided with elongated holes (7) at positions that are not needed for for definite position replicas.

6. A switching error protection device according to Claim 5, characterized in that six to ten, preferably eight, coding shutters (2) are combined with the replica drives (1), light transmitters (4) and light-receivers (5) on a switching plate.

7. A switching error protection device according to Claim 5 or 6, characterized in that an externally-visible, preferably optical electronic, position indicator is provided for each of the coding shutters (2) and, preferably, is located on a front edge of the switching plate.

8. A switching error protection device according to one of Claims 5 to 7, characterized in that the thickness h of the coding shutters (2) is less than 0.1 mm and is preferably about 0.05 mm and that the coding shutters (2) consist of metal.

9. A switching error protection device according to one of Claims 5 to 8, characterized in that the light-receivers (5) are constructed as phototransistors and that for amplified reproduction of the light received a photodiode (8) or a laser diode is connected to the output side of each light-receiver (5) constructed as a phototransistor.

10. A switching error protection device according to Claim 2 and if necessary to one of Claims 3 to 9, characterized in that an optical reflection system (10) is placed in front of each optical-electronic light-receiver (5) and only a portion of the incident light can be supplied to the optical-electronic light-receiver (5) via the optical reflection system (10), the other portion of the incident light being, if necessary, reflectable into an optical cable (9) that passes it on, that preferably the degree of reflection of the optical reflection system (10) is adjustable or that, preferably, the optical reflection system (10) is formed by the reflecting surface of a photo-transistor that constitutes the optical-electronic light-receiver (5).

11. A switching error protection device according to one of Claims 1 to 10, characterized in that the replica drive (1) is constructed as an electrical stepping motor (12), particularly as a rotary stepping motor, with an electromagnetically displaceable armature (14), particularly a rotating armature, preferably consisting of ferromagnetic material.

12. A switching error protection device according to Claim 11, in which the replica drive (1) can be brought into three positions, "OFF", "RUN" and "ON", and, preferably, the "RUN" position serves at the same time to report faults, characterized in that the armature (14) of the electrical stepping motor (12) assumes in the "RUN" position of the replica drive (1) a desired position that is defined by a stepping detent (15), but however in the "OFF" position and/or in the "ON" position of replica drive (1) it comes into contact with a blocking stop (16 or 17) that lies adjacent to the relevant stepping detent (15), that, preferably, the blocking stop (16 or 17) is located at 50% to 80%, and particularly at about 65% of the stepping distance of the stepping motor (12) and that, preferably, the armature (14) is detachably held to the blocking stop (16 or 17) by a holding detent or the like.

13. A switching error protection device according to Claim 11 or 12, characterized in that that the stepping motor (12) constructed as a rotary stepping motor possesses at least two magnet cores (18, 19) of U-shaped formation, each having at least one control winding (20, 21, 22, 23) and the armature (14), constructed as a rotary armature, rotates on bearings between the pole surfaces of the magnet cores (18, 19).

14. A switching error protection device according to Claim 13, in which an electrical control circuit is provided to control the replica drive (1) in accordance with the switching position of the particular switching appliance, characterized in that each magnet core (18, 19) possesses two control windings (20, 21 or 22, 23) and that by means of the control circuit (13) the magnetic field of the particular magnet core (18, 19) can be reversed by switching over from one control winding (20 or 22) to the other control winding (21 or 23) and vice versa, and that preferably all the control windings (20, 21, 22, 23) have approximately equal, ohmic resistance.

15. A switching error protection device according to Claim 14, characterized in that to operate the stepping motor (12) at a first supply voltage the control windings (20, 21, 22, 23) are each independently connectable to this supply voltage, and that to operate the stepping motor (12) at a second supply voltage about twice as great the series connection of one control winding (20 or 21) of the first magnet core (18) and one control winding (22 or 23) of the second magnet core (19) can be connected to the second supply voltage.

16. A switching error protection device according to one of Claims 11 to 15, in which an electrical control circuit is provided to control the replica drive (1) in accordance with the switching position of the particular switching appliance and in which the replica drive (1) can be moved into three positions, "OFF", "RUN" and "ON", and, preferably, the "RUN" position serves at the same time to report faults, characterized in that the control circuit (13) for control of the replica drive (1) constructed as an electrical stepping motor (12) possesses two relays, that each of the excitation windings (24, 24) of the relays, together with corresponding contacts (26, 27) that can be operated from the switching appliance (11) are connected in parallel to one another, that in the "OFF" and in the "ON" position of the replica drive (1) current only flows through the excitation winding (24 or 25) of one relay and that, preferably, the excitation windings (24, 25) of the relays, as regards circuitry, are arranged in the first electrical operating sector with a supply voltage of 60 V, 110 V, 220 V or 250 V, and the contacts (24.1, 24.2, 24.3, 25.1, 25.2, 25.3) of the relays with the control windings (20, 21, 22, 23) of stepping motor (12) controlled by them are arranged in the second electrical operating sector conductively separated from the first electrical operating sector, with another supply voltage of 12 V, 24 V, or 48 V.

17. A switching error protection device according to claim 16, characterized in that current always flows through the same control windings (20, 23 or 21, 23) of the stepping motor (12) both in the "RUN" position of replica drive (1) and when there is no current in both excitation windings (24, 25) of the relays, as well as when there is current in both excitation windings (24, 25) of the relays.

Fig.1

Fig.2

Fig.3

Fig.4

Fig.5

Fig.6

18    15    14    12

16 (Aus)

15 (Lauf)

17 (Ein)

a    b    c    d

20    21    19

22    a    b    c    d    23

# Fig.7

13

24.2

a    b    a    b

25.2

24.1    c    d    d    c

25.1

20    22    21    23

# Fig.8